# EUROPEAN PATENT APPLICATION

(11) **EP 2 336 035 A1**
(43) Date of publication of application: **22.06.2011**
(21) Application number: 10015568.8
(22) Date of filing: 13.12.2010
(51) Int. Cl.: B65B 31/04, C12H 1/12

(54) **Device for preserving carbonated beverages**

(30) Priority: 15.12.2009 AR P090104879
(71) Applicant: Piwko, Jorge Alejandro, Ciudad de Buenos Aires (AR)
(72) Inventor: Piwko, Jorge Alejandro, Ciudad de Buenos Aires (AR)
(74) Representative: Temino Ceniceros, Ignacio

(57) **Abstract**

This invention consists in a device which may be used by bottling companies to replace the cap which is currently used by them or as an accessory to be sold directly to consumers. The device increases internal pressure by injecting air into the bottle and prevents gas from escaping the beverage. The abovementioned device consists in a cap which is similar to the original one and which has a fixed or removable pair of bellows with an air chamber, a bulb, capsule or other similar mechanism attached to its top and is characterized in that such air chamber has check valves or any other similar mechanism which may be used as a substitute thereof, allowing air to flow into the chamber and from the chamber into the bottle in order to increase its internal pressure.

## Description

This invention is related to a device for preserving carbonated beverages in general, whether alcoholic or non-alcoholic, contained in plastic, glass or other type of bottles or similar containers.

### BACKGROUND ART

The consumption of carbonated beverages of all types ―flavored, cola, tonic, soft, low-fat and diet drinks, whether alcoholic or non-alcoholic, and a wide range of variations thereof— has increased and is still increasing steadily in the whole world. In order to cut costs and cause their products to become more competitive, bottling companies have increased the size of containers, which nowadays may hold up to 3 liters, depending on the product.

Even though it is true that such practice results in cost savings, thus leading to a price/volume ratio which is more advantageous to consumers, it is also true that in most cases the product is not fully consumed, leaving undesirable amounts of beverage in the original container.

Even where the bottle is properly closed with the original cap, as soon as the container is opened and its content is partially consumed, the concentration of beverage carbonation decreases until the pressure in the empty space of the bottle becomes equal to the pressure at which carbon dioxide flows out of the beverage.

Such pressure or counter-pressure to the liquid (beverage) is produced by the loss of carbon dioxide in the beverage. The larger the empty space is, the greater the loss of carbonation in the beverage. Thus, the beverage loses carbonation, which is an essential part thereof. Where such beverage contains few or no gases, it is discarded by the consumer since it has lost the typical charm of carbonated beverages.

This represents an economic loss to the consumer, which may be significant in some cases bearing in mind the price of the beverage.

### SUMMARY OF THE INVENTION

This invention may be applied to all types of carbonated beverages, whether alcoholic or non-alcoholic, including beers, sparkling wines, and similar beverages, contained in plastic, glass or other types of bottles or similar containers.

It is the purpose of this invention to provide a device which will make it possible for beverages containing carbon dioxide (carbonated beverages) to be perfectly preserved, preventing both the loss of carbonation and that consumers be forced to discard the product due to the loss of the qualities which led them to purchase it, thus avoiding economic losses to them.

It is in pursuance of this goal that an original product was developed, which will be described herein below. By means of a simple pneumatic device, the abovementioned product makes it possible to raise the pressure in the air chamber which is created when opening the bottle (or other similar container to which this invention may be applied) and consuming part of its content, and to generate enough pressure in the air chamber to prevent the loss of gases in the beverage, thus preserving the product and its original properties in terms of flavor and texture on the palate (bubbles).

Throughout the description and claims the word "comprise" and variations of the word, are not intended to exclude other technical features, additives, components, or steps. Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

### BRIEF DESCRIPTION OF THE DRAWINGS

- FIG 1.: Shows a first embodiment of the device for preserving carbonated beverages, object of the present invention.
- FIG 2.: Shows a second embodiment of the device for preserving carbonated beverages, object of the present invention.

### DETAILED DESCRIPTION OF PARTICULAR EMBODIMENTS

As can be shown in the attached figures, the invention basically consists in a pneumatic device which replaces the original cap of the container. The following practical examples and diagrams provided herein have been prepared on the basis of the device for preserving non-alcoholic carbonated beverages.

Containers for the abovementioned beverages have been standardized and the mouth and cap of those sold by the different brands (mainly Coca-Cola®, Pepsi® and less well-known brands) are compatible irrespective of the size of the container. With regard to other containers, the cap must only be adapted to their respective mouths. Notwithstanding the foregoing, the concept of the device is the same as the one explained herein below.

The invention is materialized in two embodiments which operate in exactly the same manner are introduced below. All references made herein are related to the accompanying drawings.

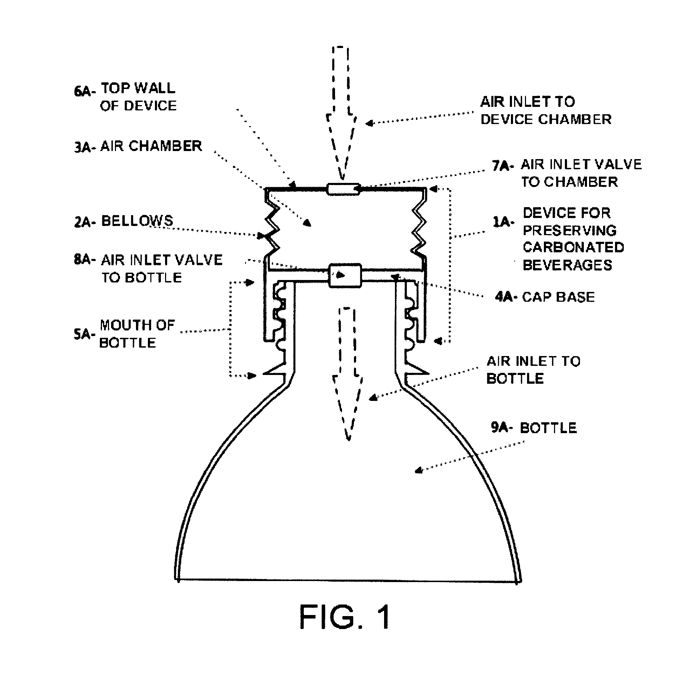

### First embodiment (FIG.1)

It is intended to replace the original cap which is used nowadays on bottles and to be implemented by bottling companies. This device (1A) consists in a cap which is similar to the original one and has a pair of bellows (2A) attached to (mounted on) its top, which creates an air chamber (3A) between the top part or top wall of the device (6A) and the base of the cap (4A) which forms a hermetic seal when pressed against the mouth of the bottle (5A). The top wall of the device contains a check valve (7A) which allows air to flow into the air chamber (3A) and prevents it from escaping such chamber. The base of the cap (4A) contains a check valve (8A) which allows air to flow into the bottle (9A) and prevents it from flowing into the air chamber (3A).

Upon describing the different components which explain the nature of the invention, this description is now supplemented with the functional and operational explanation of its parts and the result produced thereby.

Once the device (1A) has been screwed onto the mouth of the bottle (5A), gentle pressure is applied to the top wall of such device (6A) by pushing downwards. As a result, when the pair of bellows (2A) is compressed, the check valve of the base (8A) opens, thus causing air to flow into the bottle (9A). When pressure is released, the pair of bellows (2A) returns to its original position and as the air inlet valve to the chamber (7A) -located at the top of the device- opens, the air chamber (3A) is refilled with air. Repeating this process few times, the air pressure in the empty space of the bottle (9A) is increased, thus preventing gases from escaping the beverage.

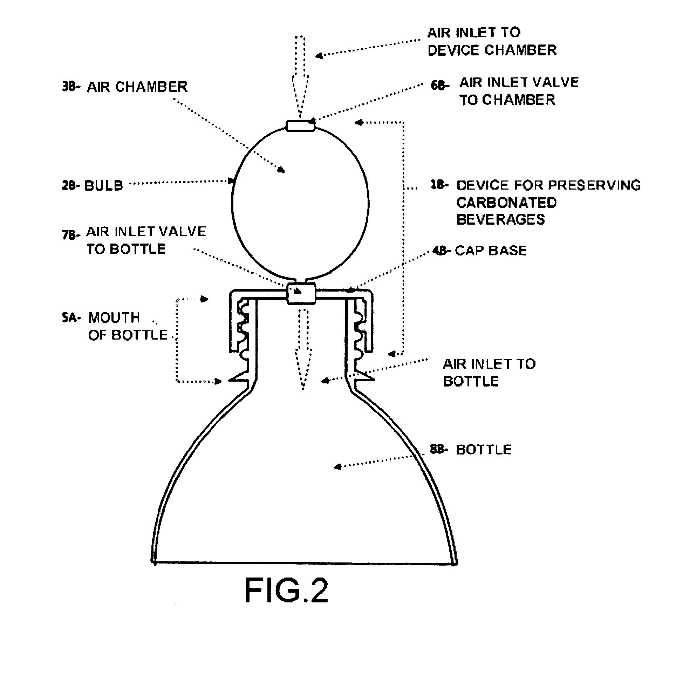

### Second embodiment (FIG.2)

It is intended to be sold directly to consumers to replace the original cap of bottles. This device (1B) consists in a cap which is similar to the original one. Such cap has a silicone rubber or other similar type of bulb or bladder (2B) attached to (mounted on) its top, which bulb has an air chamber inside (3B) and is attached to the cap base (4B) -which forms a hermetic seal when pressed against the mouth of the bottle (5B). The bulb (2B) has a check valve (6B) which allows air to flow into the air chamber (3B) and prevents it from escaping. The base of the cap (4B) contains a check valve (7B) which allows air to flow into the bottle (8B) and prevents it from flowing into the air chamber (3B).

Upon describing the different components which explain the nature of the invention, this description is now supplemented with the functional and operational explanation of its parts and the result produced thereby.

Once the device (1B) has been screwed onto the mouth of the bottle (5B), gentle pressure is applied to the bulb (2B), thus opening the check valve on the cap base (7B) and causing air to flow into the bottle (8B). When pressure is released, the bulb (2B) returns to its original position and as the air inlet valve to the chamber (6B) ―located on the bulb (2B) — opens, the air chamber (3B) is refilled with air. By repeating this process a few times, the air pressure in the empty space of the bottle (8B) increases, thus preventing gases from escaping the beverage.

Two of the construction possibilities which lead to the implementation of the invention and explain the manner in which it works have been hereinabove described.

## Claims

1. Device for preserving carbonated beverages, whether alcoholic or non-alcoholic, contained in plastic, glass or other type of bottles or similar containers in which, **characterized in that** it comprises means configured for the injection of air into the bottle, increasing the internal pressure and preventing that gases from the beverage escape.

2. Device according to claim 1 wherein a pair of bellows with an air chamber, a bulb, capsule or other similar mechanism is attached to the original cap of the container or any other cap which may be used as a substitute thereof.

3. Device according to previous claims wherein said chamber may be fixed or removable.

4. Device according to previous claims wherein it may be made of plastic, rubber, silicone, or any other material which allows it to be fully operational.

5. Device according to previous claims wherein the air chamber has fixed or removable check valves or any other similar mechanism which may be used as a substitute thereof, which allow air to flow into the chamber and from the chamber into the bottle in order to increase its internal pressure.
